Europäisches Patentamt

European Patent Office

Office européen des brevets

(19)

(11) Veröffentlichungsnummer: **0 198 069**
**B1**

(12) **EUROPÄISCHE PATENTSCHRIFT**

(45) Veröffentlichungstag der Patentschrift: 04.07.90

(51) Int. Cl.⁵: **B 23 Q 5/40**

(21) Anmeldenummer: 85905510.5

(22) Anmeldetag: 11.10.85

(86) Internationale Anmeldenummer:
PCT/EP85/00533

(87) Internationale Veröffentlichungsnummer:
WO 86/02304 24.04.86 Gazette 86/09

(54) VORSPANNEINRICHTUNG FÜR AXIAL VORGESPANNNTE LAGER.

(30) Priorität: 11.10.84 DE 3437349

(43) Veröffentlichungstag der Anmeldung:
22.10.86 Patentblatt 86/43

(45) Bekanntmachung des Hinweises auf die
Patenterteilung:
04.07.90 Patentblatt 90/27

(84) Benannte Vertragsstaaten:
CH DE FR GB LI SE

(56) Entgegenhaltungen:
DE-A-2 117 539
DE-A-2 501 447
DE-B-1 152 870

(73) Patentinhaber: Boehringer Werkzeugmaschinen
GmbH
Stuttgarter Strasse 50 Postfach 220
D-7320 Göppingen (DE)

(72) Erfinder: HORSKY, Anton Dipl.-Ing.
Hauptstrasse 34
D-7321 Wangen (DE)
Erfinder: VOSS, Wolf-Dietrich
Erlengrund 10
D-7325 Boll (DE)

(74) Vertreter: Vogeser, Werner, Dipl.-Ing. et al
Patentanwälte Hansmann & Vogeser Albert-
Rosshaupter-Strasse 65
D-8000 München 70 (DE)

## Beschreibung

Die Erfindung betrifft eine Vorspanneinrichtung für axial vorgespannte Wälzlager an Kugelumlaufspindeln in Werkzeugmaschinen.

Die Vorspannung von Lagern dient der Erhaltung der Spielfreiheit und Erhöhung der Steifigkeit. Bei Axiallagern für Kugelgewindetriebe in Werkzeugmaschinen ist eine besonders hohe Vorspannung bei gleichzeitig geringen zulässigen Abweichungen der Vorspannwerte notwendig, da sonst die Wälzkörper in den Lagern sehr leicht von der rollenden zur gleitenden Fortbewegung übergehen, was zu einem hohen Verschleiß und frühzeitigen Defekt der Lager führt.

Es ist bekannt, die Vorspannung auf die Axiallagerung von Wellen, Gewindetrieben und ähnlichem über eine Wellenmutter aufzubringen. Eine solche Lagervorspannung ist in der Druckschrift ZAE D 058 310+ "Lagereinheiten für Kugelgewindetriebe", Ausgabe 1983, Seite 27, der Fa. INA Wälzlager, Schaeffer KG, Industriestr. 1, 8522 Herzogenaurach, dargestellt. Als Einstellgröße für die Vorspannkraft dient das Drehmoment, mit dem die Wellenmutter festgezogen wird.

Diese Art der Lagervorspannung weist mehrere Unzulänglichkeiten auf. Die Proportionalität zwischen dem Drehmoment, mit dem die Wellenmutter festgezogen wird, und der Vorspannung, mit der das Lager beaufschlagt wird, variiert über einen weiten Bereich, da die Reibung sowohl im Gewinde der Wellenmutter als auch an der Anlagefläche der Wellenmutter nicht genau genug bekannt ist. Es können also aus einem bestimmten Anzugsmoment der Wellenmutter die unterschiedlichsten Vorspannungen des Lagers resultieren, abhängig von so schwer zu erfassenden Faktoren wie Oberflächengüte im Gewinde und an der Anlagefläche der Wellenmutter, verwendetes Schmiermittel, Schmierungszustand, Temperatur des Schmiermittels und der Bauteile etc.. Die Tatsächliche Vorspannung des Lagers ist also nie bekannt.

Außerdem treten bei kurzfristigen Überlastungen oder bei Schwingungen des Lagers, die durch Rattererscheinungen an der Arbeitseinheit der Werkzeugmaschine verursacht sein können, Setzungserscheinungen am Lager und an der Vorspanneinheit auf. Dieses Einebnen bzw. Ineinanderpressen der kleinen Unebenheiten von zwei aneinanderliegenden Oberflächen führt zu einer Herabsetzung der Vorspannung. Bei schweren Fällen, beispielsweise bei Kollisionen im Arbeitsbereich der Werkzeugmaschine, kann die Vorspannung sogar auf Null fallen. Damit verliert das Lager seine Steifigkeit und Spielfreiheit, und durch diese unzulässigen Betriebsbedingungen wird die Lebensdauer drastisch herabgesetzt.

Ein weiterer Kritikpunkt ist auch der aufgrund der Verwendung eines Drehmomentschlüssels problematische Einbau und Anzug der Wellenmutter bei beengten Einbauverhältnissen.

Aus der DE-A-2 117 539, insbesondere der Fig. 2 und dem zugehörigen Text. ist zwar die Vermittlung einer axialen Vorspannkraft auf ein Lager mit Hilfe von Tellerfedern gezeigt, jedoch zielt diese Schrift ausschließlich darauf ab, eine Lagervorspannung zu schaffen, die während des normalen Betriebes der Maschine nicht federt, sondern nur bei Kollisionen zwischen Werkzeug und Werkstück und ähnlich starken Überlastungen der Lager.

Des weiteren zeigt die DE-B-1 152 870 das Aufbringen einer axialen Vorspannung auf das Axiallager einer Werkzeugmaschinenspindel, jedoch handelt es sich dabei um eine separate Vorspanneinheit, die sich ausserhalb der eigentlichen Lagerung der Spindel befindet. Vielmehr dienen die an den Tellerfedern angebrachten Axiallager lediglich zum Aufbringen der Axialspannkraft auf die drehende Spindel, da es das Ziel der gesamten Vorrichtung ist, die gesamte Spindel ständig unter Spannung zu halten.

Der Erfindung liegt die Aufgabe zugrunde

a) die Einstellung einer geforderten Vorspannung ohne die Berücksichtigung der Reibung und anderer sehr schlecht quantifizierbarer Faktoren zu ermöglichen;

b) diese Vorspannung auch bei Setzungserscheinungen weiterhin aufrechtzuerhalten;

c) eine Einstellung der geforderten Vorspannung in den beengten Einbauverhältnissen der Muttergasse auch ohne Drehmomentschlüssel zu ermöglichen;

d) ein gleichmäßiges Aufbringen der Vorspannkraft auf das Lager zu gewärleisten;

e) das Abfangen von Kraftspitzen zu ermöglichen.

Diese Aufgabe wird erfindungsgemäß entspeched Anspruch 1 dadurch gelöst, daß die Wellenmutter, beispielsweise einer Spiethmutter, axial über elastische Elemente, z.B. Tellerfedern, mittelbar auf das Lager wirkt. Aus der Federkennlinie dieser Elemente läßt sich der für die gewünschte Vorspannung benötigte Federweg bestimmen, der über die Gewindesteigung in einen Drehwinkel umgerechnet wird, mit dem eine Nutmutter, mit der die federnden Elemente unter Spannung gesetzt werden, angezogen werden muß. Der Anzug der Mutter bis zu einer bestimmten Drehlage ist auch bei geringem Montageraum möglich.

Treten am Lager oder an der Vorspanneinheit Setzungserscheinungen auf, so bewirken diese nur einen sehr geringen Abfall der Vorspannung, entsprechend dem flachen Anstieg der Federkennlinie der federnden Elemente. Kurzfristige Überlastungen der Vorspanneinheit werden weich abgefangen, da Analog zur Federkennlinie ein Zusammenschieben der federnden Elemente um den Betrag $\Delta$ s nur eine geringe zusätzliche Kraftbeaufschlagung des Lagers zur folge hat.

Das gleichmäßige Aufbringen der Vorspannkraft auf den Lagerring bzw. ein vermittelndes Bauteil ist durch die ringförmige Ausbildung der federnden Elemente gewährleistet.

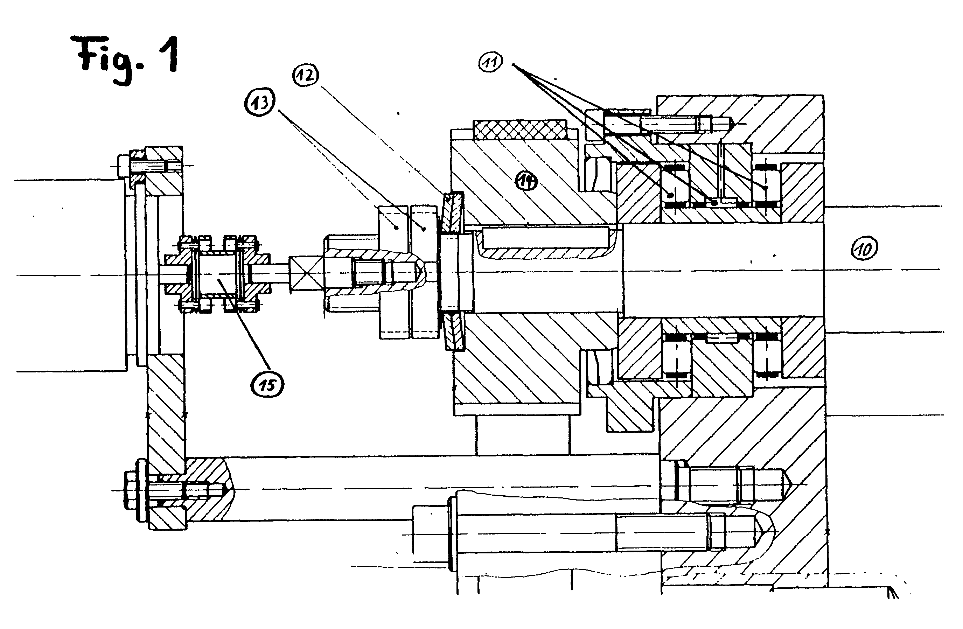

Eine beispielshafte Ausführungsform der Erfindung ist in Figur 1 dargestellt. Man sieht das angetriebene Ende eines Kugelgewindetriebes in einer Werkzeugmaschine.

Die unter Zwischenschaltung der Kupplung 15 angetriebene Spindel 10 des Kugelgewindetriebs ist im Nadelaxialrollenlager 11 gelagert. Die zur verschleißarmen und exakten Funktion des Lagers 11 benötigte hohe Vorspannung wird nicht, wie sonst üblich, mittels einer Wellenmutter aufgebracht, da, z.B. bei einer Spieth-Mutter, die Vorspannung des Lagers über das Anzugsmoment der Mutter definiert ist, ohne daß zwischen den beiden Größen ein fester Zusammenhang besteht. Setzungen im Lager oder im Muttergewinde bewirken ausserdem ebenso eine Herabsetzung der Vorspannung wie kurzzeitige Überlastungen der Vorspanneinheit.

Verwendet man dagegen zum Vorspannen eine Mutter 13 bzw. zwei Muttern, zum anschließenden Kontern, und ordnet zwischen den spannenden Muttern 13 und dem vorzuspannenden Lager 11 bzw. einem vermittelnden Bauteil wie der Zahnriemenscheibe 14, die drehfest mit der Spindel 10 verbunden ist und die Vorspannkraft an den anliegenden Lageraussenring des Lagers 11 weitergibt, als federnde Elemente die Tellerfedern 12 an, so läßt sich der Druck der Mutter 13 auf die Federn 12, und damit die Vorspannung des Lagers 11, dadurch exakt bestimmen, daß nach dem Handanzug der Muttern 13 bis zur Anlage an den Federn 12 eine bestimmte Anzahl Umdrehungen bzw. ein bestimmter Drehwinkel für die Mutter 13 vorgegeben wird, der aufgrund der Gewindesteigung einem bestimmten Federweg der Federn 12 und damit über deren Feuerkernlinie einer bestimmten Federkraft entspricht, die über die ringförmige Anlage an der Zahnriemenscheibe 14 gleichmäßig an das Lager 11 weitergegeben wird.

## Patentansprüche

1. Axial vorgespanntes Wälzlager mit Vorspanneinrichtungen an Kugelumlaufspindeln in Werkzeugmaschinen, wobei wenigstens eine Spannmutter (13) auf die Spindel (10) aufgeschraubt ist, die eine einstellbare axiale Vorspannkraft unter Vermittlung von rundum anliegenden, federnden Elementen (12) auf einen Laufring des Wälzlagers aufbringt, welches sich mit einem anderen Laufring an der Stirnfläche der Spindel (10) abstützt.

2. Wälzlager mit Vorspanneinrichtung nach Anspruch 1, wobei es sich bei dem Wälzlager um ein Nadelaxialrollenlager (11) mit integrierter Radiallagerung handelt.

## Revendications

1. Palier à roulement pré-contraint axialement comportant des dispositifs de précharge disposés sur des vis à circulation de bille montées dans des machines-outil, au moins un écrou de serrage (13) étant vissé sur la broche (10) et fournissant, par l'intermédiaire d'éléments élastiques (12) appuyant sur le pourtour, une force de précharge axiale réglable à une bague de roulement du palier à roulement, bague s'appuyant par une autre bague de roulement sur la face frontale de la vis (10).

2. Palier à roulement comportant un dispositif de précharge selon la revendication 1, pour lequel il s'agit pour le palier à roulement d'un palier à rouleaux (11) et à aiguilles axiales comportant un palier radial intégré.

## Claims

1. Axialyly pre-loaded roller bearing with pre-loading devices on ball screws in machine tools, at least one loading nut (13) being screwed onto the spindle (10) by which an adjustable axial pre-loading force is applied to a through the medium of spring elements (12) a bearing race of the roller bearing, which rests by another bearing race against the end face of the spindle (10).

2. Roller bearing with a pre-loading device in accordance with Claim 1, the roller bearing being an axial needle roller bearing (11) with an integrated radial bearing system.

Fig. 1

11

12

13

11

10

15

EP 0 198 069 B1